# EUROPÄISCHE PATENTANMELDUNG

(11) **EP 0 847 731 A1**
(43) Veröffentlichungstag der Anmeldung: **17.06.1998**
(21) Anmeldenummer: 97117121.0
(22) Anmeldetag: 02.10.1997
(51) Int. Cl.: A61C 5/06

(54) **Kartusche zur Aufnahme von pastösem Material**

(30) Priorität: 10.12.1996 DE 19651139
(71) Anmelder: Heraeus Kulzer GmbH, 63450 Hanau (DE)
(72) Erfinder: Arnold, Helmut, 60529 Frankfurt am Main (DE); Balkenhol, Markus, Dr., 61250 Usingen (DE); Schödel, Dieter, Dr., 65193 Wiesbaden (DE)
(74) Vertreter: Kühn, Hans-Christian

(57) **Zusammenfassung**

Die Erfindung betrifft eine Kartusche zur Aufnahme von pastösem Material mit einem zylindrischen Behälterteil (1), einer an einem Ende des Behälterteils schräg zu dessen Achse angeordneten Auslaßspitze (2) mit einem Auslaßkanal, einer die Auslaßspitze umgebenden Schutzkappe (6), einem an dem zweiten Ende des zylindrischen Behälterteils angeordneten Befestigungsteil (10), das zur Anordnung der Kartusche an eine Ejektoreinrichtung vorgesehen ist und mit einem Kolben (13), der eine zylindrische Mantelfläche aufweist und der in Längsrichtung der Kartusche beweglich angeordnet und zum Abdichten des Kartuschen-Innenraumes sowie zum Ausbringen des pastösen Materials vorgesehen ist. Um die Kartusche sicher an eine Ejektoreinrichtung anzuschließen und einen hohen Hygienestandard zu gewährleisten, weist das dem Behälterteil abgewandte Ende der Auslaßspitze, an dem eine Auslaßöffnung angeordnet ist, einen radialen Abstand zur Achse des Behälterteils auf, der höchstens genauso groß ist wie der Radius des Behälterteils, wobei das Befestigungsteil als Schraubgewinde (11) ausgebildet ist und die Schutzkappe als einseitig geschlossener Zylinder, dessen innerer Durchmesser mindestens ebenso groß ist wie der äußere Durchmesser des Behälterteils, wobei die Schutzkappe den Behälterteil umgibt. Die Erfindung betrifft weiterhin eine Schutzkappe für eine Kartusche sowie eine Ejektoreinrichtung zur Handhabung der Kartusche.

## Beschreibung

Die Erfindung betrifft eine Kartusche zur Aufnahme von pastösem Material mit einem zylindrischen Behälterteil, einer an einem Ende des Behälterteils schräg zu dessen Achse angeordneten Auslaßspitze mit einem Auslaßkanal, einer die Auslaßspitze umgebenden Schutzkappe, einem an dem zweiten Ende des zylindrischen Behälterteils angeordneten Befestigungsteil, das zur Anordnung der Kartusche an eine Ejektoreinrichtung vorgesehen ist und mit einem Kolben, der eine zylindrische Mantelfläche aufweist und der in Längsrichtung der Kartusche beweglich angeordnet und zum Abdichten des Kartuschen-Innenraumes sowie zum Ausbringen des pastösen Materials vorgesehen ist. Desweiteren betrifft die Erfindung eine Schutzkappe für eine Kartusche sowie eine Ejektoreinrichtung zur Handhabung der Kartusche.

Derartige Kartuschen und entsprechende Ejektoren sind beispielsweise aus US 4,391,590 bekannt. Diese Kartuschen dienen der Verabreichung von Dentalmaterial durch den Zahnarzt. In die Kartusche wird beispielsweise ein Füllungswerkstoff für Zähne eingefüllt. Die Kartusche wird in eine Ejektoreinrichtung eingelegt, mit der das Material mittels eines Stempels aus der Kartusche herausgepreßt wird, beispielsweise in eine Zahnkavität. Dazu weist die bekannte Kartusche einen Befestigungsflansch auf, mit dem sie in der Ejektoreinrichtung gehaltert wird. Die Kartusche selbst weist eine Auslaßspitze auf, die mit einer Kappe verschlossen ist. Das rückseitige Ende der Kartusche ist mit einem Kolben verschlossen. Die Halterung einer derartigen Kartusche ist relativ kompliziert, da die zum Auspressen des Dentalmaterials benötigte Kraft von dem relativ kleinen Flansch abgefangen werden muß. Zum Einsetzen der Kartusche in eine Ejektoreinrichtung muß die Kartusche vom Zahnarzt oder dessen Personal angefaßt werden, so daß Keime auf ihre Oberfläche übertragen werden. Da derartige Kartuschen an ihrer Zylindermantelfläche gehaltert werden, werden auch auf der Ejektoreinrichtung befindliche Keime unmittelbar auf die Kartusche übertragen und können von dort in den Mund des Patienten gelangen.

Aufgabe der vorliegenden Erfindung ist es, eine Kartusche bereitzustellen, die sicher an eine Ejektoreinrichtung zur Verabreichung des Dentalmaterials angeschlossen werden kann und die dabei nicht oder nur minimal an ihrer mit dem Mund des Patienten in Berührung gelangenden Oberfläche verunreinigt wird, sowie die Bereitstellung einer dafür geeigneten Ejektoreinrichtung.

Diese Aufgabe wird gemäß der vorliegenden Erfindung dadurch gelöst, daß das dem Behälterteil abgewandte Ende der Auslaßspitze, an dem eine Auslaßöffnung angeordnet ist, einen radialen Abstand zur Achse des Behälterteils aufweist, der höchstens genauso groß ist wie der Radius des Behälterteils (die Spitze befindet sich also innerhalb einer fiktiven Verlängerung des Zylinders des Behälterteils), daß die Schutzkappe als einseitig geschlossener Zylinder ausgebildet ist, dessen innerer Durchmesser mindestens ebenso groß ist wie der äußere Durchmesser des Behälterteils und daß die Schutzkappe den Behälterteil umgibt (mit Ausnahme des in den Befestigungsteil mündenden Querschnitts). Der innere Durchmesser der Schutzkappe muß so groß sein, daß die Schutzkappe am Umfang des Behälterteils anliegt und sich nicht ohne äußere Krafteinwirkung von diesem löst. Eine derartige Kartusche ist sehr fest mit der Ejektoreinrichtung zu verbinden; eine Schraubverbindung hält auch größeren Kräften stand. Der Behälterteil wird mit Hilfe der Schutzkappe an die Ejektoreinrichtung angeschraubt. Das bedeutet, daß die Kartusche bei der Handhabung bis hin zum Einsetzen in die Ejektoreinrichtung an der Schutzkappe erfaßt und gehalten wird; das Behälterteil selbst kommt nicht mit dem Zahnarzt bzw. der Hand des Zahnarztes in Berührung. Die Schutzkappe steckt auf dem Behälterteil auf, das heißt sie liegt an ihm an, so daß das Behälterteil nicht verunreinigt wird. Zweckmäßig ist es, daß zwischen Behälterteil und Befestigungsteil ein ringförmiger Kappenanschlag ausgebildet ist, an dem die Schutzkappe mit ihrem offenen Ende anliegt. Dadurch wird eine besonders dichte Abdichtung und damit ein besonders guter Schutz der Außenoberfläche des Behälterteils erreicht.

Vorteilhafterweise weist der Kolben an seinem Zylinderumfang mindestens einen umlaufenden Dichtring auf und die beiden Enden des Kolbens sind identisch ausgebildet. Dies ermöglicht zum einen eine einfache Montage des Kolbens innnerhalb des Behälterteils bzw. des Befestigungsteils der Kartusche und sichert zum anderen eine gute Dichtwirkung zwischen dem Kolben und der Behälterinnenwand. Vorzugsweise sind die Enden des Kolbens als Kegelstumpf ausgebildet.

Es ist zweckmäßig, daß an dem Umfang des Behälterteils im Bereich seines hinteren, dem Befestigungsteil zugewandten Ende Erhebungen ausgebildet sind, die in Vertiefungen in der inneren Mantelfläche der Schutzkappe im Bereich von deren offenem Ende eingreifen. Diese Ausbildung führt zu einer zusätzlich zur Reibungskraft wirkenden Fixierung der Schutzkappe auf dem Behälterteil, so daß die Sicherheit beim Einschrauben der Kartusche in eine Ejektoreinrichtung erhöht wird, da das Drehmoment beim Einschrauben erhöht werden kann. Die Vertiefungen umfassen dabei nicht den gesamten inneren Umfang der Schutzkappe und bilden auf diese Weise einen Anschlag für die Erhebungen an dem Behälterteil. Auch eine inverse Anordnung ist möglich, das heißt, daß die Erhebungen an der Schutzkappe und die Vertiefungen an dem Behälterteil angeordnet sind.

Zweckmäßig ist es, daß die Mündung des Auslaßkanals in den Behälterteil hinein die Achse des Behälterteils schneidet. Dadurch wird zum einen eine ausreichend lange Auslaßspitze erreicht und zum anderen wird die Menge des in dem Behälterteil verbleibenden Restinhaltes minimiert.

Eine weitere vorteilhafte Ausgestaltung der Erfindung besteht darin, daß die Innenfläche des geschlossenen Endes der Schutzkappe konisch ausgebildet ist, wobei der Konus einen Winkel zur Längsachse der Schutzkappe aufweist, der etwa gleich groß ist wie der Winkel zwischen der Achse des Behälterteils und der Fläche der Auslaßöffnung und wobei die Schutzkappe nach Aufstecken auf das Behälterteil mit ihrem geschlossenen Ende an der Auslaßöffnung anliegt. Dabei wird die Auslaßöffnung verschlossen, so daß das in dem Behälterteil der Kartusche befindliche Material vor dem Einfluß der Umgebungsatmosphäre oder vor dem Eindringen von Keimen zusätzlich geschützt ist.

Zweckmäßig ist es, daß an der Stirnfläche der Schutzkappe eine Information zur Bezeichnung des Inhaltes des Behälterteils angeordnet ist, da dadurch insbesondere bei stehender Lagerung und stehendem Transport der Kartusche in einer Palette die richtige Auswahl der Kartusche aus einer Vielzahl von Kartuschen unterschiedlichen Inhalts erleichtert wird. Außerdem kann an der äußeren Zylinderfläche der Schutzkappe ein Informationsträger angeordnet sein, der weitere Informationen über die Kartusche enthält. Derartige Informationen bzw. Informationsträger können in unterschiedlicher Form vorliegen; als Schriftzug, als farbige Markierung, als Magnetcodierung oder beispielsweise als reliefartige Ausbildung.

Die Aufgabe wird erfindungsgemäß für eine Schutzkappe dadurch gelöst, daß die Schutzkappe zylinderförmig ausgebildet ist mit einem geschlossenen und einem offenen Ende, wobei die Stirnseite des geschlossenen Endes eine Information zur Bezeichnung des Inhalts der Kartusche aufweist. Insbesondere können an der inneren Mantelfläche der Schutzkappe im Bereich des offenen Endes Vertiefungen angeordnet sein, die nicht den gesamten inneren Umfang der Schutzkappe umfassen. Statt der Vertiefungen können auch entsprechende Erhebungen vorgesehen sein. Die Innenfläche des geschlossenen Endes der Schutzkappe kann, wie bereits beschrieben, konisch ausgebildet sein.

Die erfindungsgemäße Ejektoreinrichtung zur Aufnahme einer Kartusche mit einer Führungshülse und einem in einem Führungskanal der Führungshülse beweglich angeordnenten Stempel, mit einem an einem Ende der Führungshülse angeordneten Handgriff, an dem ein Hebel zur Ausübung einer in Längsrichtung auf den Stempel wirkenden Kraft beweglich angeordnet ist, und mit einer an dem anderen Ende der Führungshülse angeordneten Halterung für die Kartusche, wobei die Halterung einen Durchbruch (beispielsweise eine Bohrung) in ihrer Längsrichtung aufweist, der eine Fortsetzung des Führungskanals bildet, ist dadurch gekennzeichnet, daß die Halterung um den Durchbruch herum ein Gewinde aufweist zur Aufnahme eines komplementären Schraubgewindes der Kartusche. Eine derartige Ejektoreinrichtung ist zur Aufnahme der erfindungsgemäßen Kartusche geeignet und sichert damit einen optimalen Schutz der Kartusche vor einer Verunreinigung. Insbesondere kann die Halterung an ihrem äußeren Ende um das Gewinde herum eine Anschlagfläche aufweisen zur Anlage an einen Kappenanschlag der Kartusche, um zum einen einen festen Sitz der Kartusche innerhalb der Ejektoreinrichtung zu gewährleisten und um zum anderen die Lage der Kartusche, insbesondere der Auslaßspitze relativ zur Ejektoreinrichtung zu definieren, da der Kappenanschlag die Einschraubtiefe der Kartusche definiert begrenzt.

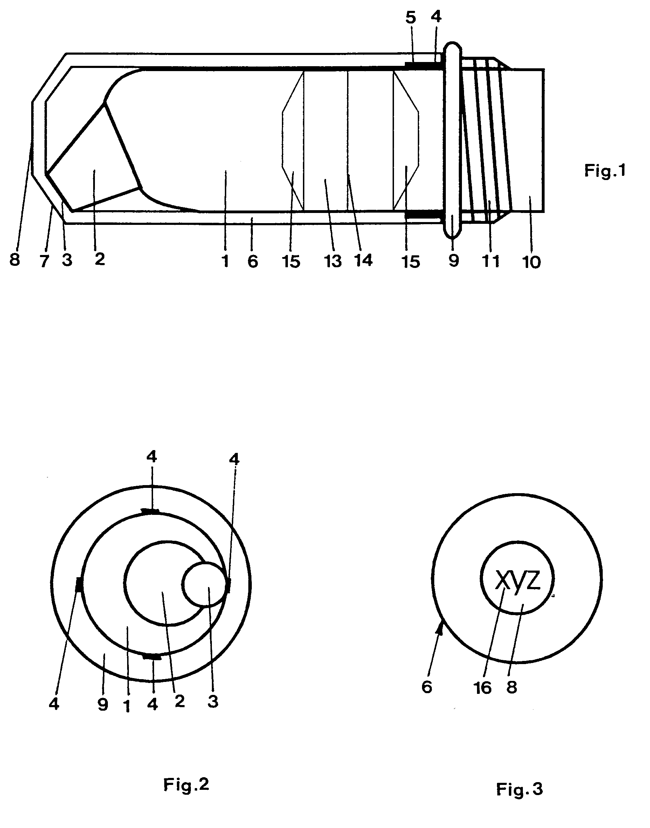

Nachfolgend wird ein Ausführungsbeispiel der Erfindung anhand einer Zeichnung erläutert. In der Zeichnung zeigt
- Figur 1: einen Querschnitt durch die Compule einschließlich der Schutzkappe
- Figur 2: eine Draufsicht auf das Behälterteil der Compule
- Figur 3: eine Draufsicht auf die Schutzkappe und
- Figur 4: eine Ejektoreinrichtung mit angeschraubter Compule.

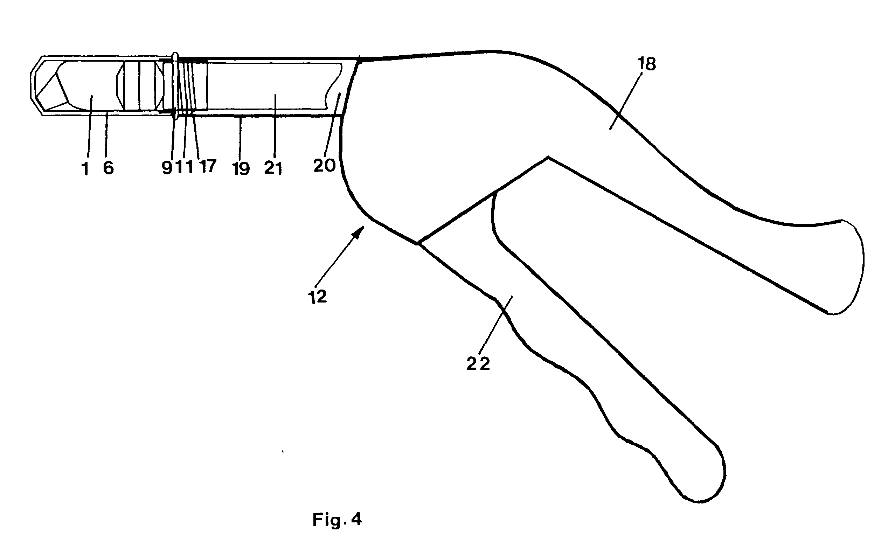

Die Compule weist ein Behälterteil 1 zur Aufnahme beispielsweise pastöser Dentalmaterialien, wie Zahnfüllungsmaterialien, auf. An einem Ende des Behälterteils 1 ist eine Auslaßspitze 2 angeordnet mit einem in der Zeichnung nicht dargestellten Auslaßkanal, der in eine Auslaßöffnung 3 mündet. Auf seiner anderen Seite mündet der Auslaßkanal in den Behälterteil 1, wobei er die Längsachse des Behälterteils 1 schneidet. Das Behälterteil 1 weist an seinem anderen Ende um den Umfang herum angeordnete Erhebungen 4 auf, die in Vertiefungen 5 einer Schutzkappe 6 eingreifen, die an der äußeren Zylindermantelfläche des Behälterteils 1 anliegt und dieses umgibt. Dabei liegt der konische Teil 7 der Stirnfläche 8 der Schutzkappe 6 an der Auslaßöffnung 3 an, so daß diese abgedichtet ist. Der hintere, offene Teil der Schutzkappe 6 liegt an einem Kappenanschlag 9 an, der um den Umfang des Behälterteils 1 herum ausgebildet ist und den Behälterteil 1 von einem Befestigungsteil 10 trennt. Das Befestigungsteil 10 weist ein Schraubgewinde 11 auf und dient der Befestigung der Kartusche in einer Ejektoreinrichtung 12 (Figur 4). Die Kartusche wird an ihrer offenen Seite, also dem Befestigungsteil 10 von einem Kolben 13 verschlossen. Der Kolben 13 dient zum einen als Verschluß und zum anderen dem Auspressen des pastösen Materials aus der Kartusche. Der Kolben 13 weist einen umlaufenden Dichtring 14 auf (es können auch mehrere Dichtringe 14 angeordnet sein) und ist an seinen beiden Enden als Kegelstumpf 15 ausgebildet. Auf der Stirnfläche 8 der Schutzkappe 6 ist eine Information 16 angeordnet, die den Inhalt des Behälterteils 1 charakterisiert. Auf der Zylindermantelfläche der Schutzkappe 6 ist ein Informationsträger angebracht, beispielsweise als Schriftzug oder als Magnetcodierung. Auch die Information 16 kann als Schriftzug, Magnetcodierung oder auf andere Weise, beispielsweise reliefartig, ausgebildet sein.

Die Kartusche wird mit ihrem Befestigungsteil 10 in eine Halterung 17 der Ejektoreinrichtung 12 eingeschraubt. Die Ejektoreinrichtung 12 weist einen Handgriff 18 auf, in dem die Führungshülse 19 angeordnet ist. Die Führungshülse 19 weist an ihrem vorderen Ende die Halterung 17 auf. Der Führungskanal 20 der Führungshülse 19 mündet in einen Durchbruch der Halterung 17, in dem ein Innengewinde zur Aufnahme des Gewindes 11 des Befestigungsteils 10 der Kartusche angeordnet ist. Innerhalb des Führungskanals 20 der Ejektoreinrichtung 12 ist ein Stempel 21 in Längsrichtung der Führungshülse 19 beweglich angeordnet. Der Stempel 21 greift innerhalb des als Gehäuse ausgebildeten Handgriffs 18 mechanisch gekoppelt an einen Hebel 22 an. Diese Ankopplung kann auf beliebige bekannte Weise geschehen. Lediglich beispielhaft wird hier auf eine Ankopplung nach US 4,391,590 verwiesen, das heißt, der im Inneren des Gehäuses des Handgriffs 18 gelegene Teil des Hebels 22 wirkt auf ein Ende des Stempels 21. Auch jede beliebige andere Ankopplung, die eine Längsverschiebung des Stempels 21 ermöglicht, ist denkbar. Die in Figur 4 dargestellte, oben beschriebene Ejektoreinrichtung 12 ermöglicht die Verwendung der erfindungsgemäßen Kartusche und sichert ein hygienisches Benutzen der Kartusche, das heißt eine größtmögliche Sauberkeit des mit dem Patienten eventuell in Berührung kommenden Behälterteils 1 der Kartusche. Die Kartusche kann nämlich, ohne den Behälterteil 1 zu berühren, in die Ejektoreinrichtung 12 eingesetzt werden. Erst danach wird die Schutzkappe 6 entfernt. Beim Einschrauben sichern die Erhebungen 4, die in die Ausnehmungen 5 eingreifen, eine gute Führung und das notwendige Drehmoment zur festen Anordnung der Kartusche an der Ejektoreinrichtung 12. Dabei wirkt der Kappenanschlag 9 zum einen als Abdichtung der Oberfläche des Behälterteils 1 dadurch, daß die Schutzkappe 6 an dem Kappenanschlag 9 anliegt. Zum anderen definiert der Kappenanschlag 9 die Einschraubtiefe der Kartusche in die Ejektoreinrichtung 12, so daß die Auslaßspitze 2 nach dem Einschrauben der Kartusche eine definierte Richtung relativ zur Ejektoreinrichtung 12 aufweist. Die Information 16 auf der Stirnfläche 8 der Schutzkappe 6 ermöglicht einen sofortigen Überblick und Zugriff auf die richtige Kartusche bei einer Vielzahl von nebeneinander, beispielsweise auf einer Palette stehend angeordneten Kartuschen. An der Zylinderwand der Schutzkappe 6 kann ein weiterer Informationsträger angeordnet sein, der Informationen über Herstellungsdaten, Verfallsdatum usw. trägt.

## Patentansprüche

1. Kartusche zur Aufnahme von pastösem Material mit einem zylindrischen Behälterteil, einer an einem Ende des Behälterteils schräg zu dessen Achse angeordneten Auslaßspitze mit einem Auslaßkanal, einer die Auslaßspitze umgebenden Schutzkappe, einem an dem zweiten Ende des zylindrischen Behälterteils angeordneten Befestigungsteil, das zur Anordnung der Kartusche an eine Ejektoreinrichtung vorgesehen ist und mit einem Kolben, der eine zylindrische Mantelfläche aufweist und der in Längsrichtung der Kartusche beweglich angeordnet und zum Abdichten des Kartuschen-Innenraumes sowie zum Ausbringen des pastösen Materials vorgesehen ist, dadurch gekennzeichnet, daß das dem Behälterteil (1) abgewandte Ende der Auslaßspitze (2), an dem eine Auslaßöffnung (3) angeordnet ist, einen radialen Abstand zur Achse des Behälterteils (1) aufweist, der höchstens genauso groß ist wie der Radius des Behälterteils (1), daß das Befestigungsteil (10) als Schraubgewinde (11) ausgebildet ist, daß die Schutzkappe (6) als einseitig geschlossener Zylinder ausgebildet ist, dessen innerer Durchmesser mindestens ebenso groß ist wie der äußere Durchmesser des Behälterteils (1) und daß die Schutzkappe (6) den Behälterteil (1) umgibt.

2. Kartusche nach Anspruch 1, dadurch gekennzeichnet, daß zwischen Behälterteil (1) und Befestigungsteil (10) ein ringförmiger Kappenanschlag (9) ausgebildet ist, an dem die Schutzkappe (6) mit ihrem offenen Ende anliegt.

3. Kartusche nach Anspruch 1 oder 2, dadurch gekennzeichnet, daß der Kolben (13) an seinem Zylinderumfang mindestens einen umlaufenden Dichtring (14) aufweist und daß die beiden Enden (15) des Kolbens (13) identisch ausgebildet sind.

4. Kartusche nach einem der Ansprüche 1 bis 3, dadurch gekennzeichnet, daß die Enden (15) des Kolbens (13) als Kegelstumpf ausgebildet sind.

5. Kartusche nach einem der Ansprüche 2 bis 4, dadurch gekennzeichnet, daß an dem Umfang des Behälterteils (1) im Bereich seines hinteren, dem Befestigungsteil (10) zugewandten Ende Erhebungen (4) ausgebildet sind, die in Vertiefungen (5) in der inneren Mantelfläche der Schutzkappe (6) im Bereich von deren offenem Ende eingreifen, wobei die Vertiefungen (5) nicht den gesamten inneren Umfang der Schutzkappe (6) umfassen.

6. Kartusche nach einem der Ansprüche 1 bis 5, dadurch gekennzeichnet, daß die Mündung des Auslaßkanals in den Behälterteil (1) die Achse des Behälterteils (1) schneidet.

7. Kartusche nach einem der Ansprüche 1 bis 6, dadurch gekennzeichnet, daß die Innenfläche des geschlossenen Endes der Schutzkappe (6) konisch ausgebildet ist, wobei der Konus (7) einen Winkel zur Längsachse der Schutzkappe (6) aufweist, der etwa gleich groß ist wie der Winkel zwischen der Achse des Behälterteils (1) und der Fläche der Auslaßöffnung (3) und wobei die Schutzkappe (6) nach Aufstecken auf das Behälterteil (1) mit ihrem geschlossenen Ende an der Auslaßöffnung (3) anliegt.

8. Kartusche nach einem der Ansprüche 1 bis 7, dadurch gekennzeichnet, daß an der Stirnfläche (8) der Schutzkappe (6) eine Information (16) zur Bezeichnung des Inhalts des Behälterteils (1) angeordnet ist.

9. Kartusche nach einem der Ansprüche 1 bis 8, dadurch gekennzeichnet, daß an der äußeren Zylinderfläche der Schutzkappe (6) ein Informationsträger angeordnet ist.

10. Schutzkappe für eine Kartusche nach Anspruch 1, dadurch gekennzeichnet, daß die Schutzkappe (6) zylinderförmig ausgebildet ist mit einem geschlossenen und einem offenen Ende, wobei die Stirnseite (8) des geschlossenen Endes eine Information (16) zur Bezeichnung des Inhalts der Kartusche aufweist.

11. Schutzkappe nach Anspruch 10, dadurch gekennzeichnet, daß an der inneren Mantelfläche der Schutzkappe (6) im Bereich des offenen Endes Vertiefungen (5) angeordnet sind, die nicht den gesamten inneren Umfang der Schutzkappe (6) umfassen.

12. Schutzkappe nach Anspruch 10 oder 11, dadurch gekennzeichnet, daß die Innenfläche des geschlossenen Endes der Schutzkappe (6) konisch ausgebildet ist.

13. Ejektoreinrichtung zur Aufnahme einer Kartusche mit einer Führungshülse (19) und einem in einem Führungskanal (20) der Führungshülse (19) beweglich angeordneten Stempel (21), mit einem an einem Ende der Führungshülse (19) angeordneten Handgriff (18), an dem ein Hebel (22) zur Ausübung einer in Längsrichtung auf den Stempel (21) wirkenden Kraft beweglich angeordnet ist, und mit einer an dem anderen Ende der Führungshülse (19) angeordneten Halterung (17) für die Kartusche, wobei die Halterung (17) einen Durchbruch in ihrer Längsrichtung aufweist, der eine Fortsetzung des Führungskanals (20) bildet, dadurch gekennzeichnet, daß die Halterung (17) um den Durchbruch herum ein Gewinde aufweist zur Aufnahme eines komplementären Schraubgewindes (11) der Kartusche.

14. Ejektoreinrichtung nach Anspruch 13, dadurch gekennzeichnet, daß die Halterung (17) an ihrem äußeren Ende eine Anschlagfläche zur Anlage an einen Kappenanschlag (9) der Kartusche aufweist.
